# EUROPEAN PATENT APPLICATION

(11) **EP 1 783 458 A1**
(43) Date of publication of application: **09.05.2007**
(21) Application number: 06122065.3
(22) Date of filing: 11.10.2006
(51) Int. Cl.: G01C 23/00

(54) **System and method for presenting aircraft heading and track in a track-forward display format**

(30) Priority: 14.10.2005 US 249323
(71) Applicant: Honeywell International Inc., Morristown, New Jersey 07962 (US)
(72) Inventor: Wyatt, Ivan S. (Sandy), Scottsdale, AZ 85255 (US)
(74) Representative: Haley, Stephen

(57) **Abstract**

Disclosed is a system and method for displaying a Horizontal Situation Indicator (HSI) in which the track is project along a forward direction, and the heading is displayed in a heading indicator that translates around the periphery of the compass card of the HSI, depending on the heading. The track is displayed at the 12:00 position of the compass card, which refers to the forward direction. The heading indicator includes a numerical display and an arrow, which points toward the center of the compass card. By displaying the HSI so that the track is at the 12:00 position, the pilot may guide the airplane along ground track without having to mentally convert heading into track, thereby relieving the burden on the pilot.

## Description

The present invention involves the display of a vehicle's navigation information.

An important facet of aviation safety is the pilot's situational awareness of the status of the aircraft, including its position, velocity, and external factors such as wind direction and terrain. Toward this end, advances in human factors research have led to dramatic improvements in the display of information to the pilot. Further, advances in visual display technology, such as high quality flat display panels, have enabled the pilot to be presented with information in a visual format that is not possible with traditional dials and gauges.

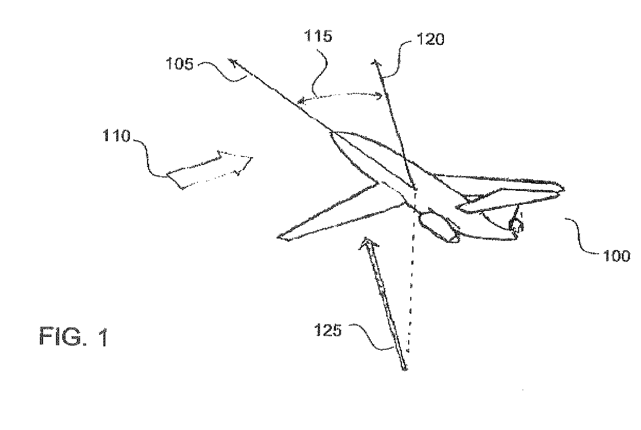

FIG. 1 illustrates an aircraft 100 in flight. The aircraft's heading 105 corresponds to the horizontal component (perpendicular to the local gravity vector) of the direction in which the aircraft 100 is pointing. If the aircraft is flying in wind that has a velocity component 110 perpendicular to the heading 105, the aircraft's 100 direction of flight will change according to a drift angle 115 that is proportional to the speed of the aircraft and the speed of the perpendicular component 110 of the wind velocity. This results in the aircraft 100 flying at a ground track 120 (hereinafter "track"), which refers 10 the horizontal direction of the aircraft's motion along the ground 125.

A well-established format for displaying heading 105 and track 120 to a pilot is a Horizontal Situation Indicator (HSI). Heading 105 and track 120 may be represented relative to true north or magnetic north.

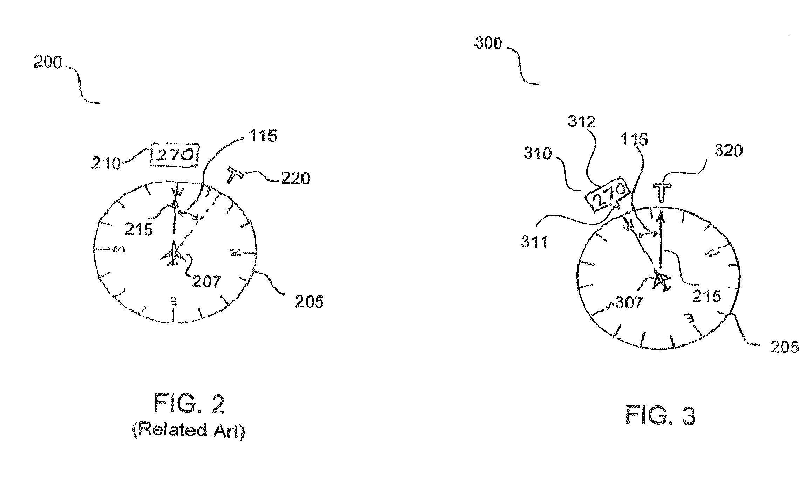

FIG. 2 illustrates a typical HSI display 200 according to the related art. HSI display 200 includes a compass card 205; an aircraft representation 207; a heading indicator 210; and a track indicator 220, which is represented by a "T." According to a related art HSI display 200, the heading indicator 210 and the aircraft representation 207 are fixed so that the aircraft representation 207 points in the forward direction 215. The forward direction 215 and the aircraft representation 207 remain fixed relative to the instrument panel of the aircraft 100 and point substantially vertically. The compass card 205 rotates to show the heading 105 of the aircraft 100 as parallel to the forward direction 215. The position of the track indicator 220 varies with track 120 of the aircraft 100. Generally, the track indicator 220 translates around the periphery of the compass card 205 according to changes in track 120. Further, the track indicator 220 rotates so that the "T" points toward the center of the compass card 205.

As illustrated in FIG. 2, the drift angle 115 is the angle between the heading 105 shown in the heading indicator 210 and the track 120 represented by the track indicator 220.

The related art HSI display 200 has certain disadvantages resulting from the fact that the HSI display 200 represents the forward direction 215 as parallel to heading 105. Given a non-zero drift angle 115, the forward direction 215 represented by the HSI display 200 shows the direction the aircraft 100 is pointing, not the direction in which it is going. As such, under nighttime or instrument flight conditions, the pilot must mentally convert from heading to track in order to accurately guide the aircraft along a prescribed direction along the ground 125. Under strong or variable crosswind conditions, this may burden the pilot and contribute to track error, Track error refers to the deviation between actual track and desired track.

Under instrument conditions, track error may lead to navigational errors that put the aircraft at risk, put undue stress on the air traffic control system, and waste time and fuel.

Accordingly, there is a need for a Horizontal Situation Indicator that presents heading and track in such a way that the pilot is relieved of the burden of mentally converting from heading to track. Relieving the pilot of this burden minimizes track error and enables the pilot to more accurately guide the aircraft.

Accordingly, the present invention is directed to a system and method for presenting aircraft heading and track in a track-forward display format that substantially obviates one or more of the problems due to limitations and -disadvantages of the related art.

An advantage of the present invention is that it minimizes track error.

Another advantage of the present invention is that it reduces the burden on the pilot when flying in instrument conditions.

Additional features and advantages of the invention will be set forth in the description which follows, as well as the appended drawings. In accordance with one aspect of the present invention, these and other advantages are achieved by a system for displaying a heading and a track of a vehicle. The system comprises a device for computing the track; a sensor for measuring the heading; a display device; and a processor having an interface for communicating with the device, the sensor, and the display device, wherein the processor has a computer readable medium encoded with a program for displaying a compass card, displaying the track at a forward position on the compass card, and displaying a heading indicator at a location relative to a periphery of the compass card that corresponds to the heading,

In another aspect of the present invention, the aforementioned advantages are achieved by a computer readable medium encoded with a program for displaying a heading and a track of a vehicle. The program comprises a program for obtaining the track; a program for obtaining the heading; a program for displaying a compass card on a display, wherein a compass direction on the compass card corresponding to the track points in a forward direction; and a program for displaying a heading indicator, wherein the heading indicator is located at a periphery of the compass card, and at a position corresponding to the heading.

In another aspect of the present invention, the aforementioned advantages are achieved by a method for displaying a heading and a track of a vehicle. The method comprises obtaining the heading; obtaining the track; displaying a compass card, wherein an angle on the compass card corresponding to the track is at a forward position; and displaying a heading indicator along a periphery of the compass card and at a position corresponding to the beading.

In another aspect of the present invention, the aforementioned advantages are achieved by a system for displaying a heading and a track of a vehicle. The system comprises means for computing the track; means for measuring the heading; and means for displaying a compass card, a heading indicator, and the track indicator, wherein the track indicator is located at a forward position relative to a periphery of the compass card, and wherein the heading indicator is located at a position relative to the periphery of the compass card corresponding to the heading.

In the Drawings:
The accompanying drawings, which are included to provide a further understanding of the invention and are incorporated in and constitute a part of this specification, illustrate embodiments of the invention and together with the description serve to explain the principles of the invention.
FIG. 1 illustrates an aircraft along with heading and track in the presence of crosswind;
FIG. 2 illustrates a related art Horizontal Situation Indicator;
FIG. 3 illustrates an exemplary track-forward Horizontal Situation Indicator according to the present invention;
FIG. 4 illustrates a second exemplary track-forward Horizontal Situation Indicator;
FIG. 5 illustrates an exemplary system for displaying a track-forward Horizontal Situation Indicator according to the present invention; and
FIG. 6 illustrates as exemplary process for displaying track-forward Horizontal Situation Indicator according to the present invention.

FIG. 3 illustrates an exemplary track-forward HSI 300 according to the present invention. HSI 300 incudes a compass card 205; a track indicator 320, which includes a "T" displayed above the compass card and remains substantially fixed along the forward direction 215; a heading indicator 3 10 having a numerical display part 312; and an aircraft representation 307. Heading indicator 310 translates around the compass card 205 according to the drift angle 115. As the heading indicator 310 translates, it may rotate so that an arrow portion 311 points toward the center of the compass card 205. Heading indicator 310 provides a numerical representation of heading 105. The aircraft representation 307 rotates to point toward the heading indicator 310.

The HSI 300 may be oriented such that the forward direction 215 is in a 12:00 position. In this case, the track indicator 320 is in the 12:00 position. The 12:00 refers to a substantially vertical direction in a plane defined by the compass card 205, wherein the vertical direction is in the reference frame of the track-forward HSI 300.

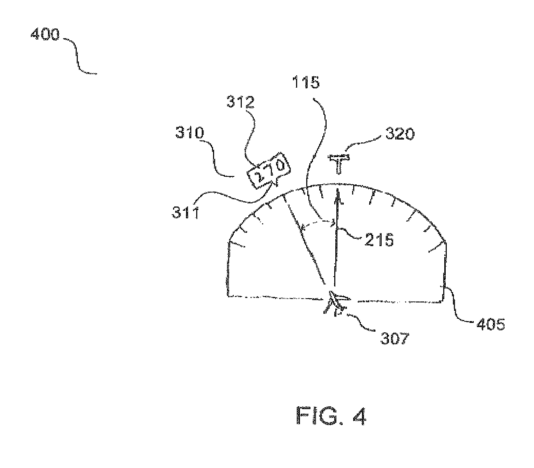

FIG. 4 illustrates a second exemplary track-forward HSI 400 according to the present invention. HSI 400 is substantially similar to HSI 300, except that a limited angular extent of the compass card 405 is displayed. Depending on the aircraft 100, the drift angle 115 may be limited in magnitude. Accordingly, limiting the angular extent of the compass card 405 provides for greater resolution in the display of heading 105 and track 120.

HSI 300 or 400 may be displayed in a dedicated video display panel, or may be incorporated into a more comprehensive information display, The more comprehensive information display may include other information, such as a moving map, a projection of terrain and obstacles, and an attitude indicator.

Variations to exemplary HSIs 300 and 400. For example, the track indicator 320 may use another symbol, other than a "T." The compass card 205/405 may take a different shape, such as a linear scale. In this case, the track indicator 320, which corresponds to the forward direction 215, may remain substantially fixed in the center of the linear scale; and the heading indicator 310 may translate along the linear scale to point to the heading. It will be readily apparent to one of ordinary skill that such variations are possible and within the scope of the invention.

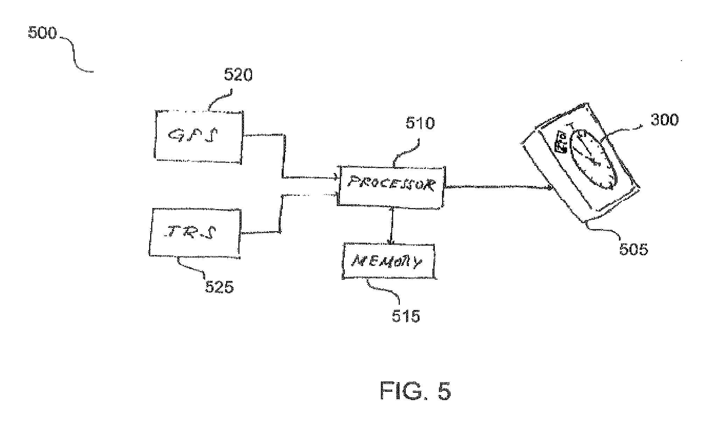

FIG. 5 illustrates an exemplary system 500 for displaying a track-forward HSI according to the present invention. System 500 includes a display panel 505, which is illustrated showing the track-forward HSI 300; a processor 510 having a memory 515; a Global Positioning System (GPS) receiver 520; and an Inertial Reference System (IRS) 525.

The display panel 505 may be one of any number of electronic display devices certified for use in a cockpit. The processor 510 may be an embedded processor 510 that is part of an aircraft navigation system, or the processor may be integrated with the display panel 505. The processor 510 may include a data communications device or network interface (hereinafter "interface"), by which it may communicate with the IRS 525, and GPS receiver 520, and the display panel 515.-The processor 510 is connected to a memory 515, which has a computer readable medium encoded with software for performing processes associated with the present invention (hereinafter "the software"). The memory 515 may be integrated with the processor 510, or it may be remotely located, whereby the processor 510 accesses the memory 515 via a network connection. It will be readily apparent to one of ordinary skill that many architectures for the processor 5 10, memory 515, and display panel 505 are possible and within the scope of the invention.

The software includes a program or programs for representing, manipulating, and displaying the compass card 205 (or 405), the heading indicator 310 and the airplane representation 307. As used herein, "program" may refer to any computer instruction, set of computer instructions, and/or any combination of computer instructions and stored data values.

The GPS receiver 520 may be the type used in airborne applications, Similarly, the IRS 525 may be one of many kinds of Inertial Reference Systems used in aircraft applications. Alternatively, the IRS 525 may be a strapdown Attitude and Heading Reference System (AHRS). If the IRS 525 provides track 120 information, the GPS receiver 520 may not be necessary. Also, the GPS receiver may be integrated into the IRS 525, in which case, the software may obtain track information through the IRS 525. One of ordinary skill will readily recognize that various combinations of sensors are possible and within the scope of the invention, provided that they are capable of providing real time track and heading information.

The GPS receiver 520 and the IRS 525 may communicate with the processor 510 via any of a number of aerospace data communication schemes. The processor 510 may communicate with the GPS receiver 520, the IRS 525, and the display 505, over a wireless network, a fiberoptic network, a data bus structure, a dedicated hardware connection, etc. The processor's interface may be compatible with any combination of such communication schemes.

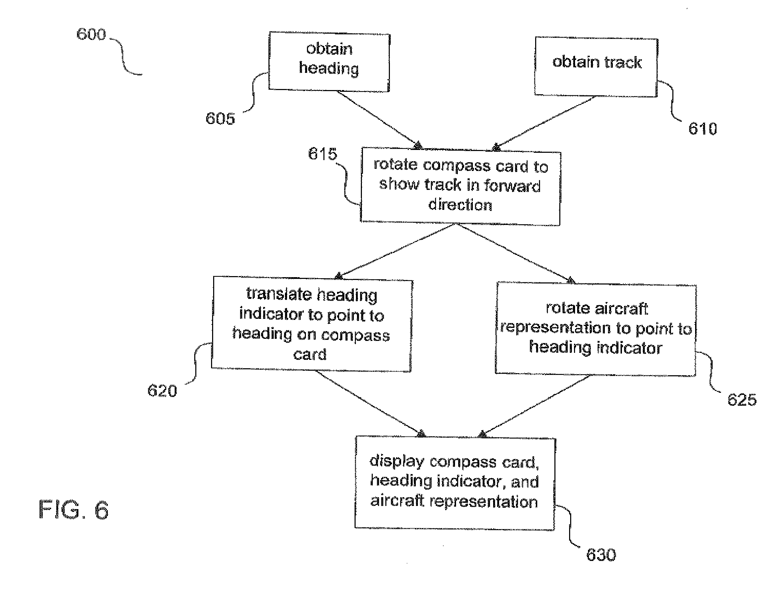

FIG. 6 illustrates and exemplary process 600 for providing a track-forward HSI. All or part of process 600 may be performed by the software. Certain aspects of process 600 may be performed by embedded processors integrated into the GPS receiver 520 and/or the IRS 525.

In step 605, the software obtains heading 105 data from the IRS 525. In doing so, the software may issue a command to the IRS 525 to retrieve heading data, or the IRS 525 may report this data as part of a data packet that is periodically transmitted according to a predetermined data rate. The software stores the heading data values in memory 515. The software may buffer the heading data values along with time tag and other ancillary data obtained from the IRS 525 to account for differences in data rates between the IRS 525 and the GPS receiver 520.

In step 610, the software obtains track 120 data from the GPS receiver 520. In doing so, the software may issue a command to the GPS receiver 520 to retrieve the track 120 data, or the GPS receiver 520 may periodically report this data as part of a data packet that is periodically transmitted according to a predetermined data rate. Alternatively, the software may retrieve position and time data from the GPS receiver 520, and compute the track 120 based on a time series of obtained position and time data.

The software stores the track 120 data values in memory 515. In doing so, the software may buffer the track 120 data values along with time tag and other ancillary data that may be obtained from the GPS receiver 520.

In step 615, the software retrieves the most recent track data value from memory 515. The software then executes instructions to rotate the compass card 205/405 so that the compass direction corresponding to the track data value is parallel to the forward direction 215.

In step 620, the software retrieves the most recent heading data values from memory 515. With this data value, the software executes instructions to translate the heading indicator 310 around the compass card 205/405 such that the heading indicator 3 10 is aligned with the heading 105.

The software may represent the heading indicator 310 in different parts: the arrow part 311, and a numerical display part 312. The software may rotate the heading indicator 310 so that its arrow part 311 points substantially toward the center of the compass card 205/405. Alternatively, the software may maintain the numerical display part 312 in a substantially horizontal orientation and rotate the arrow part 311 so that it projects from the numerical display part 312 toward the center of the compass card 205/405.

In step 625, the software executes instructions to rotate the aircraft representation 307 so that it points in a direction parallel to the heading 105.

In step 630, the software issues commands to the display panel 505 to display the HSI 300/400, including the compass card 205/405, heading indicator 310, and airplane representation 307, as computed in steps 615, 620, and 625.

Steps 605 and 610 may be performed in parallel, and may be performed at different rates. For example, heading 105 data may be obtained from the IRS 525 at a higher or lower frequency than the track 120 data. Further, steps 615. 620, and 625 may be performed in different sequences, or simultaneously, depending on how the software is implemented.

If the GPS receiver 520 is integrated into the IRS 525, then steps 605 and 610 may be performed in a single step. In this case, the software may obtain the heading data and track data from a single data packet retrieved from, or transmitted by, the IRS 525. One of ordinary skill will readily recognize that the software may obtain heading and track data via may different data communications schemes, all of which are within the scope of the present invention.

Exemplary process 600 may be implemented by the software, hardware (using electronic and/or electromechanical components), or a combination of hardware and software,

Although the embodiments illustrated above pertain to aircraft, the invention may be employed in different applications in which a moving object is to be guided in such a way that the direction of its motion may be different from the direction in which it is pointing. Examples of such applications include Unmanned Arial Vehicles (UAVs), underwater vehicles, ships, spacecraft, ground vehicles, and robots,

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A system for displaying a heading and a track of a vehicle, comprising:
a device (520) for computing the track;
a sensor (525) for measuring the heading;
a display device (505); and
a processor (510) having an interface for communicating with the device (520), the sensor (525), and the display device (505), wherein the processor (510) has a computer readable medium (515) encoded with a program for displaying a compass card (205/405), displaying the track at a forward position on the compass card (205/405), and displaying a heading indicator (310) at a location relative to a periphery of the compass card (205/405) that corresponds to the heading.

2. The system of claim 1, wherein the program for displaying the heading indicator (310) comprises a program for displaying a numerical representation of the heading (312).

3. The system of claim 2, wherein the program for displaying the heading indicator (310) comprises a program for displaying an arrow part (311), wherein the arrow part (311) points substantially toward a center of the compass card (205/405).

4. The system of claim 2, wherein the program for displaying the heading indicator (310) comprises a program for rotating the numerical representation (312) according to the angle around the periphery of the compass card (205/405).

5. A computer readable medium (515) encoded with a program for displaying a heading and a track of a vehicle, the program composing:
a program for obtaining the track;
a program for obtaining the heading;
a program for displaying a compass card (205/405) on a display (505), wherein a compass direction on the compass card (205/405) corresponding to the track points toward a 12:00 position on the compass card (205/405); and
a program for displaying a heading indicator (310), wherein the heading indicator (310) is located at a periphery of the compass card (205/405), and at a position corresponding to the heading.

6. The computer readable medium (515) of claim 5, wherein the program for displaying the heading indicator (310) comprises a program for displaying an arrow part (311), wherein the arrow part (311) points substantially toward a center of the compass card (205/405).

7. The computer readable medium (515) of claim 5, wherein the program for displaying the heading indicator (310) comprises a program for displaying a numerical part (312), wherein the numerical part (312) displays a number corresponding to the heading.

8. The computer readable medium (515) of claim 7, wherein the program for displaying the numerical part (312) comprises a program for rotating the numerical part (312) by a rotation angle corresponding to a drift angle.

9. A method for displaying a heading and a track of a vehicle, comprising:
obtaining the heading (605);
obtaining the track (610);
displaying (630) a compass card (205/405), wherein an angle on the compass card (205/405) corresponding to the track is at a 12:00 position; and
displaying (630) a heading indicator (310) along a periphery of the compass card (205/405) and at an angle corresponding to the heading.

10. A system for displaying a heading and a track of a vehicle, comprising:
means for computing the track (520);
means for measuring the heading (525); and
means for displaying a compass card (205/405), a heading indicator (310), and the track indicator (320), wherein the track indicator (320) is located at a forward position relative to a periphery of the compass card (205/405), and wherein the heading indicator (310) is located at a position relative to the periphery of the compass card (205/405) corresponding to the heading.
